# EUROPÄISCHE PATENTANMELDUNG

(11) **EP 0 902 226 A1**
(43) Veröffentlichungstag der Anmeldung: **17.03.1999**
(21) Anmeldenummer: 98116756.2
(22) Anmeldetag: 04.09.1998
(51) Int. Cl.: F16L 13/14

(54) **Verbindung eines Metallrohres mit einer Metallhülse**

(30) Priorität: 12.09.1997 DE 19740144
(71) Anmelder: Parker Hannifin GmbH, 33652 Bielefeld (DE)
(72) Erfinder: Udhöfer, Andreas, 3334 Gütersloh (DE)
(74) Vertreter: Linser, Heinz

(57) **Zusammenfassung**

Die Erfindung betrifft eine Verbindung eines Metallrohres (3) mit einer Metallhülse (1) mit Hilfe einer Preß-Kaltverformung. Die Metallhülse (1) ist hierbei auf ihrem Innenmantel mit einem Rohranschlag (4) versehen, und der mit dem Rohrende (3) zu verbindende Teil der Hülse (1) weist auf seinem Innenmantel vor der Verpressung Verformungen (9,13,15,17) auf. Die Verformungen (9,13,15,17) des Innenmantels der Metallhülse (1) sind in einem Ausführungsbeispiel als um die Achse der Hülse (1) verlaufende Rippen (9) ausgebildet. Die Rippen (9) auf dem Innenmantel der Metallhülse (1) weisen untereinander einen unterschiedlichen Abstand auf. Die Verformung (9,13,15,17) des Innenmantels der Hülse (1) weist bei einem anderen Ausführungsbeispiel eine konvexe Wölbung (14) auf, so daß nach der Verpressung eine reibschlüssige Verbindung entsteht.

## Beschreibung

Die Erfindung betrifft eine Verbindung eines Metallrohres mit einer Metallhülse mit Hilfe einer Preß-Kaltverformung und ein Verfahren zur Herstellung einer solchen Rohrverbindung.

Auf dem Gebiet der Schlauchverbindungen für höhere Drucke ist es bekannt, Doppelhülsen als Verbindungselemente zu verwenden, welche aus einer Außen- und einer mit dieser am Ende verbundenen Innenhülse bestehen. Die äußere Hülse weist an ihrer Innenwandung umfangsförmig verlaufende zahnförmige Stege auf. Zur Montage mit einem Schlauchende wird das Verbindungselement bis zu seinem Ende auf das Schlauchende geschoben und mit Hilfe eines Montagegerätes der äußere Mantel auf den Schlauchmantel gepreßt. Das Montagegerät besteht aus einem konischen Werkzeug, das aus mehreren Segmenten besteht und in einem Innenkonus axial verschoben wird. Durch die Verpressung des äußeren Mantels dringen die Zähne in die Oberfläche des Schlauches bis auf seine metallische Seele ein. Dadurch wird die Hülse mit dem Schlauch verbunden und gegenüber der Hülse abgedichtet.

Zur stoßförmigen Verbindung von zwei metallischen Rohren ist es aus der EP 0 470 902 bekannt eine Hülse zu verwenden, welche an ihrer Innenwandung Axialrippen aufweist. Die Hülse besteht aus einer Legierung mit Memory-Effekt bezüglich ihrer Form. Zur Verbindung von zwei Rohren wird die Hülse über die Rohrenden geführt und durch Wärmebehandlung der Memory-Effekt ausgelöst, wodurch die Hülse auf die Rohrenden aufschrumpft und so eine dichte Verbindung herstellt.

Die vorliegende Erfindung hat es sich zur Aufgabe gemacht, eine Rohrverbindung mittels einer Preß-Kaltverformung herzustellen, welche eine formschlüssige Verbindung darstellt, eine hohe Dichtigkeit und hohe Druckfestigkeit aufweist und durch die Verbindungsmöglichkeit mit allen gängigen Rohranschlußverbindungen vielfältige Anschlußmöglichkeiten bei preiswerter Herstellung bietet.

Die Lösung dieser Aufgabe besteht bei der eingangs genannten Verbindung eines Metallrohres mit einer Metallhülse darin, daß die Metallhülse auf ihrem Innenmantel mit einem Rohranschlag versehen ist, und der mit dem Rohrende zu verbindende Teil der Hülse auf seinem Innenmantel Verformungen aufweist. Mit Hilfe einer Preß-Kaltverformung unter einem entsprechenden Druck durch ein Montagewerkzeug pressen sich die Verformungen in den Mantel des zu verbindenden Rohres ein und stellen so eine dichte Verbindung zwischen Rohrmantel und Hülse her.

In einer Ausführungsform der Erfindung sind die Verformungen des Innenmantels als zueinander parallel angeordnete und um die Achse der Hülse verlaufende Rippen ausgebildet. Durch die Ausübung des Anpreßdruckes verformen sich die Rippen und den Rohrmantel und bilden eine metallische Verbindung. Zwischen den Rippen verbleiben hermetisch geschlossene Dichtungsräume, wodurch eine druckfeste und druckdichte Verbindung von mehreren in Richtung der Rohrachse hintereinanderliegenden metallischen Dichtungen entsteht.

Die Verformungen und/oder Axialrippen weisen in einer vorteilhaften Abwandlung der Erfindung untereinander einen unterschiedlichen Abstand auf, so daß auch unterschiedlich große hermetisch dichte und hintereinanderliegende Räume entstehen.

Besonders vorteilhaft ist es in der Innenwandung der Hülse eine Ausnehmung zur Aufnahme eines Dichtungsringes vorzusehen, welcher zur Unterstützung der metallischen Dichtungen und zur Erhöhung der Leckagesicherheit eingesetzt wird. Eine solche Ausnehmung ist zweckmäßiger Weise vor der ersten Rippe der Hülse im Bereich des Rohranschlags vorgesehen, so daß die Druckfestigkeit weiter verbessert wird. Als Dichtungselement eignet sich besonders ein Elastomerring.

In einer weiteren Abwandlung der Erfindung weisen die Verformungen und Rippen vor der Montage unterschiedliche Höhen auf, die sich bei einer Preß-Kaltverformung in den Mantel des Rohres zu unterschiedlichen Zeiten einpressen und sich dabei auch selbst verformen, so daß eine formschlüssige Verbindung entsteht. Bei einer solchen Ausführungsform wird für den Preßvorgang eine stetig zunehmende Kraft benötigt, da eine zunehmende Anzahl Rippen oder Verformungen in den Preßbereich gelangen. Erst wenn alle Verformungen oder Rippen dem Preßvorgang unterworfen sind, nimmt der Kraftanstieg steil zu, so daß dadurch das Ende der Montage angezeigt wird.

Bei einer weiteren Ausführungsform weist die Hülse einen konisch verlaufenden Eingangsbereich auf, dem sich eine Anzahl Verformungen und/oder Rippen anschließen. Hierdurch wird die Montage beim Einführen des Rohres in die Hülse verbessert. Wesentlich ist es jedoch, daß Schwingungen, welche vom Rohr übertragen werden, durch den konisch verlaufenden Eingangsbereich wesentlich gedämpft werden.

Die Verformung des Innenmantels der Hülse ist in einer weiteren Ausführungsform als eine konvexe Wölbung ausgebildet, so das nach der Verpressung eine Reibschlüssige Verbindung entsteht. Zur Erhöhung des Reibwertes ist die Fläche der konvexen Wölbung in an sich bekannter Weise aufgerauht.

Zur weiteren Erhöhung des Reibwertes ist die Fläche der konvexen Wölbung mit einem mikroverkapselten Kleber beschichtet. In Abwandlung hierzu kann auch die Innenfläche der Hülse mit einem harten und körnigen Granulat beschichtet werden.

Die Metallhülse ist in einer konkreten Ausführungsform mit einem Rohrverschraubungsanschluß kombiniert.

Gründsätzlich läßt sich die Verbindung nach der Erfindung mit allen auf dem Markt befindlichen Rohrverschraubungssystemen kombinieren.

Die mit dem Rohrende zu verbindende Metallhülse wird gemäß dem Verfahren zur Herstellung der Rohrverbindung auf das Rohrende bis zu ihrem Anschlag geschoben und sodann einem Preßdruck ausgesetzt, derart, daß die Verformungen und/oder Rippen der Hülse sich und den Rohrmantel plastisch verformen. Hierzu können Schlauchpressen verwendet werden, wie sie an sich auf dem Markt erhältlich sind, jedoch sind deren Arbeitsdrucke entsprechend zu verstärken oder es sind spezielle Werkzeugeinsätze zu verwenden.

Die Erfindung wird anhand der Zeichnungen näher erläutert. Hierbei zeigen:
- FIGUR 1: a) eine Hülse mit einer Anschlußverschraubung und einem in der Hülse befindlichen Rohrende in Seitenansicht und Teilschnitt und
b) Figur 1a im montierten Zustand in entsprechender Darstellung ohne Anschlußverschraubung;
- FIGUR 2: eine Ausführungsform nach Figur 1 mit zusätzlicher Ringdichtung;
- FIGUR 3: a) eine abgewandelte Ausführungsform nach Figur 1a mit dicht angeordneten Rippen im zusammengesteckten Zustand;
b) die Ausführungsform nach Figur 3a in montierter Form nach dem Preßvorgang;
- FIGUR 4: a) eine weitere Ausführungsform mit einer konisch ausgebildeten Öffnung der Hülse im zusammengesteckten Zustand;
b) die Ausführungsform nach Figur 4a in montierter Form nach dem Preßvorgang;
- FIGUR 5: a) ein noch anderes Ausführungsbeispiel mit einer konvex geformten Innenseite der Hülse im zusammengesteckten Zustand, und
b) Figur 5a im montierten Zustand.

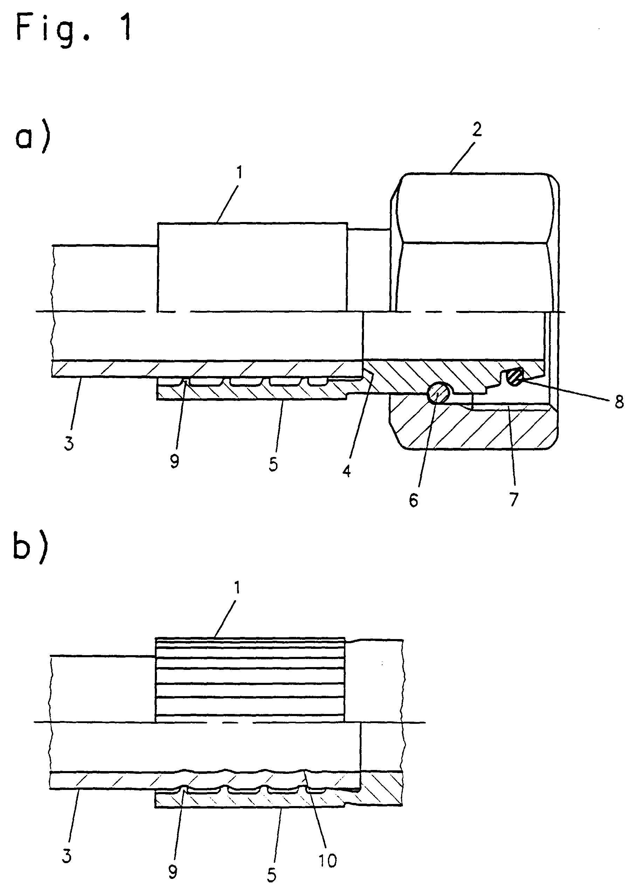

Die Figur 1a zeigt eine Hülse 1 mit einer Anschlußverschraubung 2 und einem in der Hülse befindlichen Rohrende 3 in Seitenansicht und im Teilschnitt. Das Rohrende 3 ist bis an den Anschlag 4 in der Metallhülse 5 geführt. Die Anschlußverschraubung 2 besteht aus einer Überwurfmutter, welche die Metallhülse 5 über einen Sprengring 6 erfaßt. Das Innengewinde 7 der Überwurfmutter wird mit einem nicht näher dargestellten Außengewinde eines Verbindungselements verbunden, wobei ein O-Ring 8 an die Innenwandung des Verbindungselements zur Anlage kommt. Die Metallhülse 5 weist in dem Bereich, der sich über das Rohrende 3 erstreckt, Rippen 9 auf.

Die Figur 1b zeigt die Rohrverbindung nach der Kalt-Preßverformung. Die Rippen 9 wurden hierbei derart plastisch verformt, daß auch eine geringe innere Rohrverformung stattfand, wie durch die Bezugsziffer 10 angedeutet ist. Durch den Preßvorgang sind die zwischen den Rippen 9 befindlichen Räume hermetisch abgedichtet.

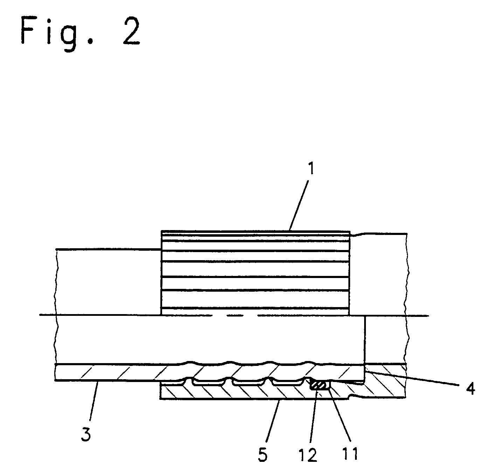

Die Figur 2 zeigt, ähnlich wie Figur 1b, eine Metallhülse 5, verbunden mit einem Rohrende 3 nach einer Preß-Kaltverformung. Bei dieser Ausführungsform befindet sich in der Metallhülse 5 eine Nut 11 zur Aufnahme einer Elastomerdichtung 12.

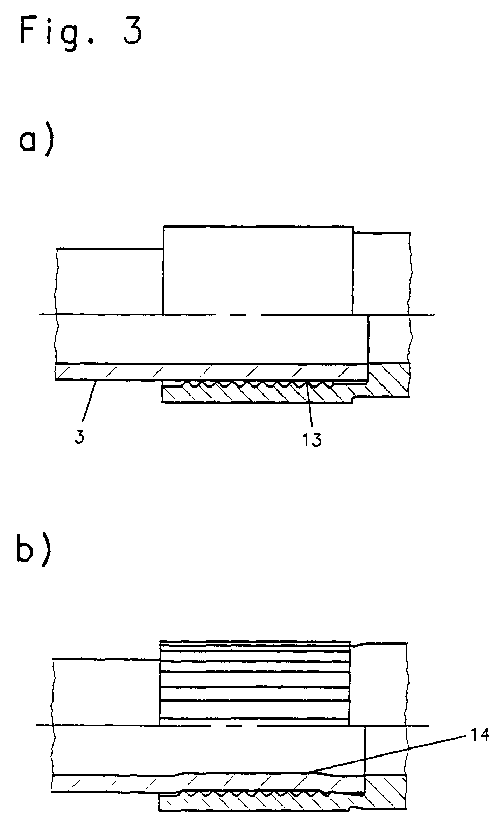

Die Figur 3a zeigt eine abgewandelte Ausführungsform nach Figur 1a mit dicht angeordneten Rippen 13 im zusammengesteckten Zustand. Die Form der einzelnen Rippen 13 verläuft konisch zum Rohrmantel. Durch die Vielzahl der Rippen 13 ergibt sich eine durchgehende Verformung 14 des inneren Rohrendes 3, wie in der Figur 3b dargestellt ist und keine Wellenform wie bei den Ausführungsbeispielen nach den Figuren 1b und 2. Dies wirkt sich günstig auf den Strömungswiderstand des Rohres aus.

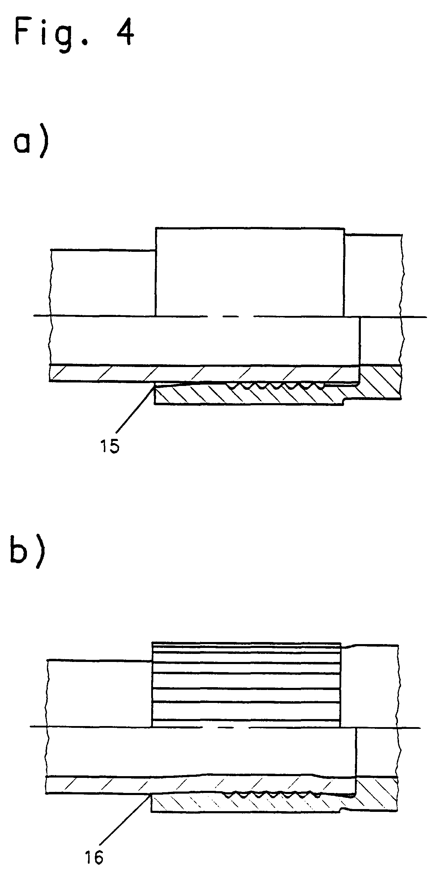

Die Figur 4a zeigt eine weitere Ausführungsform der Erfindung mit einer konisch ausgebildeten Öffnung 15 der Hülse 5 im zusammengesteckten Zustand und in Figur 4b nach der Preß-Kaltverformung. Hierbei bildet sich eine Verformung der Innenwandung des Rohrendes aus, welche eine leichte Steigung 16 aufweist.

Der konisch verlaufende Eingangsbereich der Metallhülse 5 im Vormontagezustand bewirkt, daß die Montage beim Einführen des Rohres in die Hülse verbessert wird. Nach dem Preß-Kaltverformungsprozeß bewirkt die Steigung 16 der Innenwandung der Metallhülse 5, daß Schwingungen, welche vom Rohr übertragen werden, durch den konisch verlaufenden Eingangsbereich wesentlich gedämpft werden.

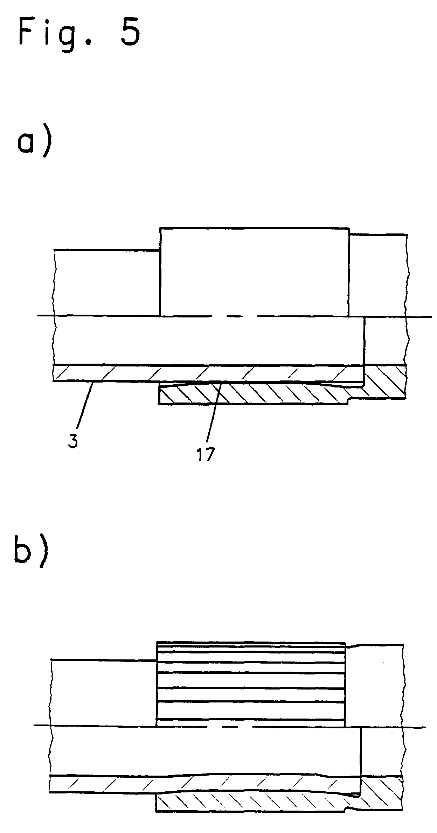

Die Figuren 5a und 5b zeigen eine konvex geformte Innenwandung der Metallhülse 5 vor der Preß-Kaltverformung. Nach dem Kaltverformungsvorgang preßt sich die Metallhülse an den Rohrmantel und bewirkt eine konvexe gewölbte Innenform des Rohres.

Mit der Erfindung wird eine Rohranschlußverbindung geschaffen, welche sich leicht herstellen läßt, sicher und dicht für höchste Drucke ist und damit hohen Anforderungen genügt.

## Patentansprüche

1. Verbindung eines Metallrohres mit einer Metallhülse mit Hilfe einer Preß-Kaltverformung, **dadurch gekennzeichnet, daß** der Innenmatel der Metallhülse (1) mit einem Rohranschlag (4) versehen ist, und der mit einem Rohrende (3) zu verbindende Teil der Hülse (5) auf seinem Innenmantel vor der über seine achsiale Länge gleichmäßigen Verpressung Verformungen (9,13,15,17) aufweist und daß die Hülse (5) mit einer Anschlußverschraubung (2) kombiniert ist.

2. Verbindung nach Anspruch 1, **dadurch gekennzeichnet, daß** die Verformungen des Innenmantels der Metallhülse (5) als um die Achse der Hülse verlaufende Rippen (9) ausgebildet sind.

3. Verbindung nach Anspruch 1 oder 2, **dadurch gekennzeichnet, daß** die Rippen (9) auf dem Innenmantel der Metallhülse (5) untereinander einen unterschiedlichen Abstand aufweisen.

4. Verbindung nach Anspruch 1, 2 oder 3 **dadurch gekennzeichnet, daß** die Innenwandung der Hülse eine Ausnehmung (11) zur Aufnahme eines Dichtungselements (12) aufweist.

5. Verbindung nach Anspruch 4, **dadurch gekennzeichnet, daß** die Ausnehmung (11) zur Aufnahme eines Dichtungselements (12) vor der ersten Rippe auf der Innenwandung der Hülse (5) im Bereich des Rohranschlags (4) angeordnet ist.

6. Verbindung nach Anspruch 4 oder 5, **dadurch gekennzeichnet, daß** das Dichtungselement (12) als Elastomerring ausgebildet ist.

7. Verbindung nach einem der voranstehenden Ansprüche, **dadurch gekennzeichnet, daß** die Verformungen oder Rippen (9) vor der Verpressung unterschiedliche Höhen aufweisen, welche sich bei einer Kaltverformung in den Mantel des Rohres (3) einpressen, so daß eine formschlüssige Verbindung entsteht.

8. Verbindung nach einem der voranstehenden Ansprüche, **dadurch gekennzeichnet, daß** die Hülse (5) einen konisch verlaufenden Eingangsbereich (15) aufweist, dem sich eine Anzahl Verformungen und/oder Rippen (9, 13) anschließen.

9. Verbindung nach Anspruch 1, **dadurch gekennzeichnet, daß** die Verformung des Innenmantels der Hülse (5) eine konvexe Wölbung (14) aufweist, so daß nach der Verpressung eine reibschlüssige Verbindung entsteht.

10. Verbindung nach Anspruch 9, **dadurch gekennzeichnet, daß** zur Erhöhung des Reibwertes die Fläche der konvexen Wölbung (17) aufgerauht ist.

11. Verbindung nach einem der voranstehenden Ansprüche, **dadurch gekennzeichnet, daß** zur Erhöhung des Reibwertes die Innenfläche der Hülse (5) mit einem mikroverkapselten Kleber oder einem harten und körnigen Granulat beschichtet ist.

12. Verfahren zur Herstellung einer Rohrverbindung nach den Ansprüchen 1 bis 11, **dadurch gekennzeichnet, daß** die mit einem Rohrende zu verbindende Metallhülse bis zu ihrem Anschlag auf das Rohrende geschoben und mit Hilfe eines Werkzeugs einem über die achsiale Länge gleichmäßigen Preßdruck ausgesetzt wird, derart, daß die Verformungen und Rippen der Hülse sich und den Rohrmantel plastisch verformen.
